# EUROPEAN PATENT APPLICATION

(11) **EP 2 099 205 A1**
(43) Date of publication of application: **09.09.2009**
(21) Application number: 07832212.0
(22) Date of filing: 20.11.2007
(51) Int. Cl.: H04M 3/42, H04M 3/54, H04Q 3/58

(54) **TELEPHONE CONNECTION CONTROL METHOD AND TELEPHONE CONNECTION CONTROL SYSTEM**

(30) Priority: 20.11.2006 JP 2006312850
(71) Applicant: Inabata & Co., Ltd., Osaka-shi, Osaka 542-8558 (JP)
(72) Inventor: SHIBATA, Hironori, NishiTokyo-shi Tokyo 188-0001 (JP)
(74) Representative: Tomlinson, Kerry John
(86) International application number: PCT/JP2007/072482
(87) International publication number: WO 2008/062803

(57) **Abstract**

A telephone connection control method for performing connection control by using a telephone connection control server having a telephone connection control function having a software telephone exchange function, connecting to plural kinds of telephone networks and being capable of switching plural kinds of telephone communication lines, the method comprising steps of:
assigning a user number to a telephone user using the telephone connection control server and handling the user number as a virtual telephone number;
assigning a telephone terminal number different from a real telephone number to a telephone terminal connecting to the telephone connection control server;
receiving from the telephone user the registration of a current position number associating the telephone terminal number of the telephone terminal that the user is going to use and a virtual telephone number corresponding to the user number and registering it with a database rewritably by the telephone connection control server; and, using, on the basis of the information registered with the database,
the virtual telephone number to perform transmission and reception by a caller using the telephone connection control server and a recipient.

## Description

### TECHNICAL FIELD

The present invention relates to a novel telephone connection control method and telephone connection control system.

### BACKGROUND ART

In recent years, in addition to fixed-line telephones often for home use, business phones often for use in offices and business establishments or cellular phones for personal use, various kinds of telephones such as IP phones have come into significantly widespread use. Also, the variety of telephone communication services has been increased.

Generally in organizations such as offices, business establishments and companies to which many people belong, a private branch exchange (PBX) may be used for performing a connection to a public switched telephone network for outside call or a connection between extension telephones. To the private branch exchange, plural or many independent telephone terminals are connected for controlling the connection relating to the outside and extension calls.

Telephone connection control systems employing such a private branch exchange are added a function called "direct dialing" that connects an outside call directly to an intended extension telephone, a function that allows holding an incoming call and, through a different telephone set, cancelling the hold state and answering to the call, a transfer function that transfers an incoming call to a different telephone automatically during an unattended time, and so on.

For the telephone transfer applying the transfer function of the private branch exchange among those functions, various proposals have been made for further enhancement of convenience.

For example, JP-A-2-137560 discloses telephone transfer called tracing telephone service in a system in which plural independent telephone sets are connected to one private branch exchange. The tracing telephone service gives a specific user identification number to a user. When the user moves from a location where the user originally attends to a different location, the user may use a telephone set in the different location to register the telephone number of the telephone set in the different location along with the user identification number with CPU of the private branch exchange. Thus, if call is made from someone's extension telephone to the user's extension telephone, the private branch exchange determines whether the transfer to the one in the different location has been registered or not. If so, the private branch exchange connects the call to the extension telephone in the different location for allowing a conversation.

However, the tracing telephone service requires a user in a different location to use a telephone set in the different location to send a specific number for different-location registration and the user identification number to the private branch exchange for registration. If a different user tries to call from an extension telephone to the user in the different location, the former user must send a specific number for the tracing telephone service and the user identification number of the called user (who is the user having moved) to the private branch exchange and must always know whether the called user has been moved or not. Furthermore, the specific numbers for the different-location registration and for the tracing telephone service must be input by both called and calling users, which requires inconvenient operations. Still further, the range where the tracing telephone service is available is limited to the extension telephones of the telephone terminals under the control of the private branch exchange, and the types of telephone terminals are limited to general business phones.

JP-A-2-231854 discloses a calling service for making call to a specific individual by providing a private branch exchange with a database with which an incoming call transfer request along with correspondence between a personal identification number given to each individual and a telephone number is to be registered, means for registering the personal identification number and telephone number of the incoming call transfer request as a result of dialing through a push button telephone set as required and means for switching to allow the calling number to arrive at the personal identification number from the database if a predetermined code followed by the personal identification number are dialed. With the calling service, if plural users use telephone sets with a same number through a private branch exchange and when a personal identification number added to an extension number is used to make call to a specific user, the call directly arrives at the specific user.

However, the calling service only allows both of calling with a telephone number and calling to a specific user if plural users use telephone sets with a same number through the private branch exchange. The calling service is for extension calls with the telephone sets connecting to an internal telephone set at a specific premise. The calling service does not consider the uses through an external line.

JP-A-2-244865 discloses a personal call communication service which gives an individual an identification number and allows calling up to the called party in any location. The personal call communication service includes, within a call communication control apparatus, first means for storing a correspondence relationship between an identification number corresponding to an individual and a first call number and a second call number, second means for calling up a communication terminal with the first call number for the call arriving at the identification number and connecting both of them, third means for receiving a control signal from the communication terminal in communication and fourth means for changing the data stored in the first means in response to an instruction from the communication terminal. In this case, if a first communication terminal uses the identification number corresponding to an individual to call the call communication control apparatus, the first call number corresponding to the identification number corresponding to the individual, which is set by the fourth means and stored in the first means, is obtained. After the second means calls up to the second communication terminal, the first communication terminal and the second communication terminal are connected. After that, if the third means instructs on the basis of the control signal from the first communication terminal, a third communication terminal is called up on the basis of the second call number corresponding to the identification number corresponding to the individual, which is stored in the first means.

However, the personal call communication service is a service considering the transfer from a fixed-line telephone to a cellular phone. The call communication control apparatus is outside of the private branch exchange and may be called proxy apparatus rather than private branch exchange.

JP-A-2-250553 discloses a system including, in a private branch exchange to which plural telephone sets are connected, an exchange table among a personal code, a location number and a temporary location number where the personal code is an employee number and transferring a call. In this case, the location number is an extension number of the department where an employee belongs, and the temporary location number is an extension number or an external line number in an outside location, which is registered when the employee leaves the department for a meeting, a business trip or the like. The extension number is registered for a meeting or an internal business trip while the telephone number (and extension number) of the outside location is registered for an outside business trip. In this system, in order to make call to an internal individual through an extension, "*" is input at the beginning in addition to the personal code (Employee number) such that the private branch exchange can distinguish it from a normal extension number. The temporary location number can be registered and be deleted by performing predetermined operations.

However, in the system, in order for an outside caller, that is, a person excluding the employees of the company to make call to an internal individual through an outside line, the outside caller must understand the system, know the personal code (employee number) of the individual, understand how to use the system and operate it intentionally.

The system is only available for general telephone terminals connecting to a general public switched telephone network connecting to a conventional type of private branch exchange and is disadvantageously not applicable to the new types of telephone networks and telephone terminals such as IP phones and Internet phones, which are lately developing rapidly.

On the other hand, aside from the call transfer as above mentioned, the telephone connection control system using the conventional private branch exchange is limited to specific telephone networks each connected for calling through an outside line, that is, to telephone connection control by using plural or many specific types of telephone sets deployed in specific locations and connecting to a private branch exchange locally. Furthermore, making call to the other party means making call to the corresponding telephone number, that is, the telephone set. However, because of the recent diversification of telephone services, the tendency that one individual has plural telephone communication means, and the tendency that people belonging to an organization such as an office, a business establishment and a company move frequently, for example, people must often know the type of telephone line network and/or the type of telephone terminal used by the other party in order to make call to the other party.

### DISCLOSURE OF THE INVENTION

### PROBLEMS THAT THE INVENTION IS TO SOLVE

The present invention was made in view of the above-described situations, it is an object of the invention to provide a telephone connection control method and telephone connection control system based on a novel concept, which allows a user to receive a call destined to the user by the telephone terminal before the user independently of the used telephone line network and/or the type of telephone terminal and allows call to the other party through the telephone terminal without knowing the types of telephone line network and telephone terminal used by the other party.

### MEANS FOR SOLVING THE PROBLEMS

According to the invention, in order to solve the problems, the following technological means or method is provided.
[1] A telephone connection control method for performing telephone connection control by using a telephone connection control server having a telephone connection control function having a software telephone exchange function, connecting to plural kinds of telephone networks and being capable of switching plural kinds of telephone communication lines, said method comprising steps of:
   assigning a user number to a telephone user using the telephone connection control server and handling the user number as a virtual telephone number;
   assigning a telephone terminal number different from a real telephone number to a telephone terminal connecting to the telephone connection control server;
   receiving from the telephone user the registration of a current position number associating the telephone terminal number of the telephone terminal that the user is going to use and a virtual telephone number corresponding to the user number and registering it with a database rewritably by the telephone connection control server; and
   using, on the basis of the information registered with the database, the virtual telephone number to perform transmission and reception by a caller using the telephone connection control server and a recipient.
[2] The telephone connection control method according to [1], wherein, as the telephone connection control server, one is used which has a function of determining the type of the telephone network to be connected from a telephone number system and connects to it.
[3] The telephone connection control method according to the [1] or [2], wherein the plural user numbers, plural terminal telephone numbers or an arbitrary combination thereof are grouped into a virtual telephone number corresponding to a ringing group number, and the plural telephone terminals corresponding to the virtual telephone number can be simultaneously called up.
[4] The telephone connection control method according to any one of the [1] to [3], wherein the telephone terminal number of the telephone terminal at an original position where the user utilizing the telephone connection control number usually attends can be registered in the database as an original position number.
[5] The telephone connection control method according to any one of the [1] to [4], wherein a dial plan for incoming calls to a user number can be defined for a telephone user.
[6] The telephone connection control method according to any one of the [1] to [5], wherein the telephone connection control server can receive the registration of the current position number by using a telephone terminal.
[7] The telephone connection control method according to any one of the [1] to [5], wherein the telephone connection control server can receive the registration of a current position number by an access through a personal computer.
[8] The telephone connection control method according to any one of the [1] to [5], wherein the telephone connection control server receives the information read by an IC tag reader provided at a specific location from an IC tag held by a telephone user and storing information for identifying the user and can receive the registration of the current position number.
[9] The telephone connection control method according to any one of the [1] to [5], wherein the registration of the current position number by using a cellular phone having a program for the current position number registration can be received.
[10] The telephone connection control method according to any one of the [1] to [9], wherein the telephone connection control server is provided in each of plural bases, and the telephone connection control servers cooperate with each other among the bases to perform intra-base telephone connection control and inter-base telephone connection control.
[11] A telephone connection control system that implements the telephone connection control method according to any one of the [1] to [10], wherein:
   the telephone connection control server has a telephone connection control unit having a software telephone exchange function, connecting to plural kinds of telephone networks, and being capable of switching plural kinds of telephone communication lines;
   the telephone connection control unit has a software telephone exchange control unit controlling an operation of a software telephone exchange and a database storing the telephone terminal number of the telephone terminal used by a telephone user and a virtual telephone number corresponding to a user number of a telephone user in association rewritably as a current position number; and
   a caller using the telephone connection control server and a recipient uses the virtual telephone number to perform transmission and reception on the basis of the information stored in the database.

According to the invention, the telephone connection control based on a novel concept is allowed by which a user can receive a call destined to the user by the telephone terminal before the user independently of the used telephone line network and/or the type of telephone terminal and call the other party through the telephone terminal without knowing the types of telephone line network and telephone terminal used by the other party.

Furthermore, according to the invention, in order to call up to the other party, a user number as a virtual telephone number can be used even when the location of the other party is not available.

According to the invention, a user can receive a call to the user by associating the direct dialing number with the user number.

According to the invention, a telephone number system can be constructed freely, and telephone terminals connecting to a telephone network can be merged.

According to the invention, user numbers, terminal telephone numbers or an arbitrary combination thereof may be grouped into a ringing group, and the number of the ringing group may be associated with a virtual telephone number. Thus, simultaneous call can be made to the ringing group as a result of grouping in various manners.

According to the invention, the portability of the usual telephone number in an organization such as a company can be obtained.

According to the invention, the telephone connection control using various kinds of telephones such as digital telephones, analog telephones, IP phones, Internet phones, cellular phones and extension telephones can be implemented.

According to the invention, a dial plan can be defined for calls to a telephone user, and a user can receive calls destined to him/her operably, easily and conveniently, under the completely different idea from those of the conventional call transfer.

According to the invention, the registration of a current position number can be received by a wide variety of input methods such as input from a telephone terminal, input over a Web, input through an IC tag and input through a cellular phone.

According to the invention, inter-base telephone connection control can be performed between/among plural bases, like intra-base telephone connection control. Furthermore, an optimum connection path (routing) through a different base can be defined.

### BRIEF DESCRIPTION OF THE DRAWINGS

[Fig. 1] Fig. 1 is a diagram showing a configuration example of the telephone connection control server (call control server) using the telephone connection control method of the invention.
[Fig. 2] Fig. 2 is a conceptual diagram of the telephone connection control system.
[Fig. 3] Fig. 3 is a diagram showing an example of the cooperation between two bases.
[Fig. 4] Fig. 4 is an explanatory diagram of a user number given to a user and a terminal number given to each telephone terminal according to the invention.
[Fig. 5] Fig. 5 is a conceptual diagram of calling using a virtual telephone number.
[Fig. 6] Fig. 6 is a diagram showing the relationship among numbers when a ringing group number is handled as a virtual telephone number.
[Fig. 7] Fig. 7 is a conceptual diagram on a method for performing current position number registration (log-in).
[Fig. 8] Fig. 8 is a diagram showing an example of the telephone connection control according to the invention.
[Fig. 9] Fig. 9 is a diagram showing an example of the telephone connection control according to the invention.
[Fig. 10] Fig. 10 is a diagram showing an example of the telephone connection control according to the invention.
[Fig. 11] Fig. 11 is a conceptual diagram on the telephone connection control using a virtual telephone number.
[Fig. 12] Fig. 12 is an operation explanatory diagram on the system in response to the occurrence of a call by direct dialing.
[Fig. 13] Fig. 13 is a diagram showing an image of the dial plan defined as a personal preference.
[Fig. 14] Fig. 14 is a diagram showing an example of the flow of the call processing when a dial plan is used.

### BEST MODE FOR CARRYING OUT THE INVENTION

Details of an embodiment of the invention will be described below.

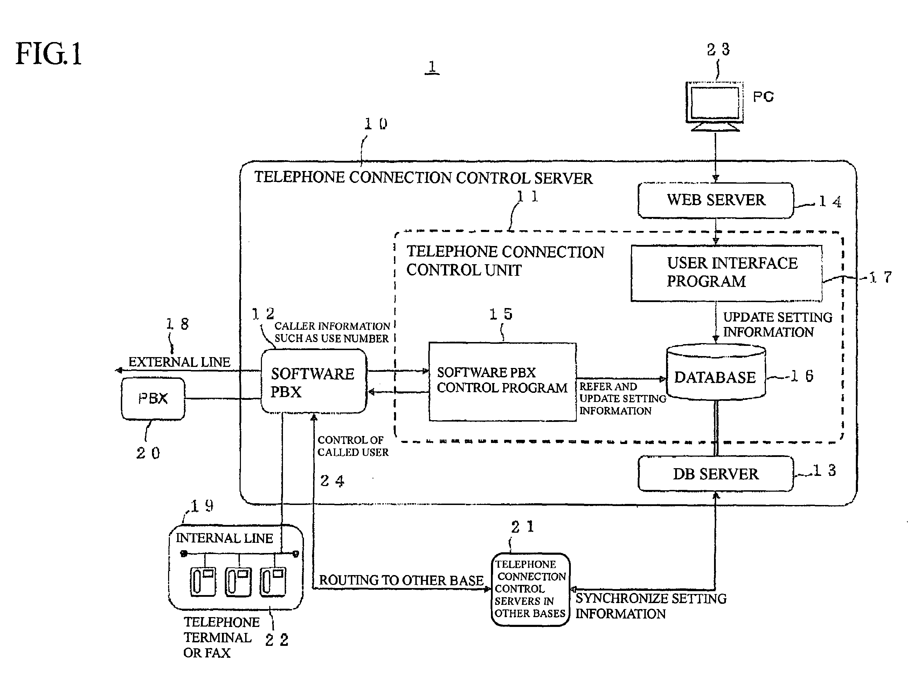

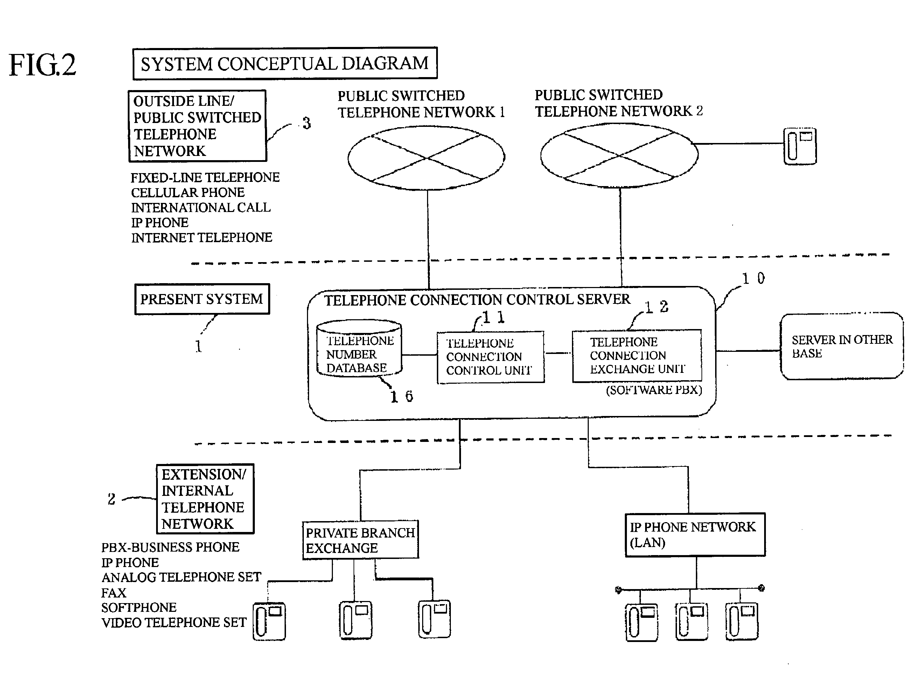

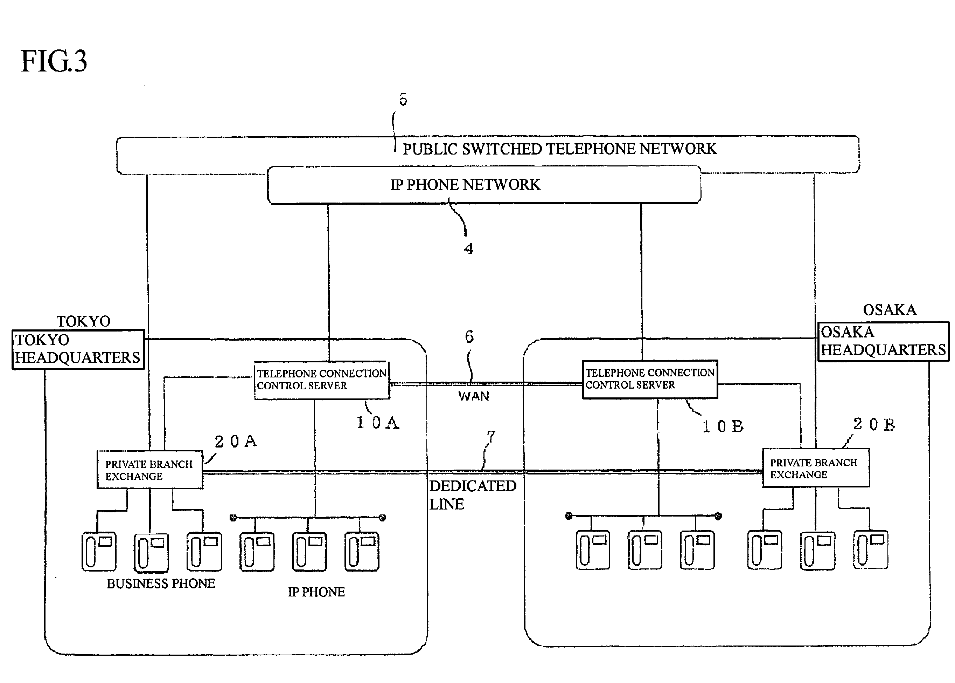

First of all, the basic concept of the invention will be described. Fig. 1 is a diagram showing the configuration of a telephone connection control server (call connection server) 10 in a configuration example of a telephone connection control system 1 that implements the telephone connection control method of the invention, and Fig. 2 is a conceptual diagram of the telephone connection control system 1. The telephone connection control system 1 includes a telephone connection control unit 11, a software telephone exchange (which is a telephone connection exchange unit and will also be called software PBX) 12, a database server (which will also be called DB server) 13 and a Web server 14. The telephone connection control unit 11 can be implemented by using a software program and hardware and has a software PBX control program 15, a database 16 and a user interface program 17. The software PBX control program 15 operates in association with the software PBX 12. The telephone connection control server 10 is connected to an external line 18 (indicated by the reference numeral 3 in Fig. 2), an internal line 19 (indicated by the reference numeral 2 in Fig. 2) and an existing private branch exchange (which will also be called PBX) 20 and is also connected to telephone connection control servers 21 in other bases. The other bases may be domestic two or plural bases or may include a foreign base. Notably, while, in this example, the telephone connection control server 10 is connected to the existing PBX 20, it is also applicable to systems without the connection to the existing PBX 20 (but with an IP phone network). In this example, plural IP phones as terminal telephones 22 are connected through an internal line to the software PBX 12. As shown in Fig. 3, business phones are connected to the PBX 20, not shown in Fig. 1. The outside elements herein are described for the illustration purpose only, and the invention is not limited thereto. In the system 1, a PC 23 is connectable to the user interface program 17 in the telephone connection control unit 11 through the Web server 14. The software PBX control program 15 is capable of referring and updating information such as registration information in the database 16 as required.
The database 16 may include tables as will be described later, for example. A circuit 24 connects the telephone connection control servers 21 in other bases and the system 1. Notably, the telephone terminals connectable by the system 1 may include telephone sets such as analog telephone sets, facsimiles, softphones and video telephone set, independently of the types of telephone sets, in addition to the illustrated IP-phones and business phones connected through the PBX 20.

The system 1 is, as shown in Fig. 2, connectable to an extension/internal telephone network 2 and an outside public switched telephone network 3 of a fixed-line telephone, a cellular phone, an international call, an IP telephone, an Internet telephone and so on. In other words, with the system 1, any types of outside public switched telephone network are applicable.

With the system 1, as illustrated in the example in Fig. 3 (with two bases for simple illustration), between the base of a Tokyo headquarters (TOKYO) and the base of an Osaka headquarters (OSAKA), a telephone connection control server 10A of the Tokyo headquarters and a telephone connection control server 10B in the Osaka headquarters may be coupled over a wide area network (WAN) 6 and be connected over an IP phone network 4. The private branch exchange 20A in the Tokyo headquarters and the private branch exchange 20B in the Osaka headquarters are connected through a dedicated line 7 and are connected over a public switched telephone network 5.

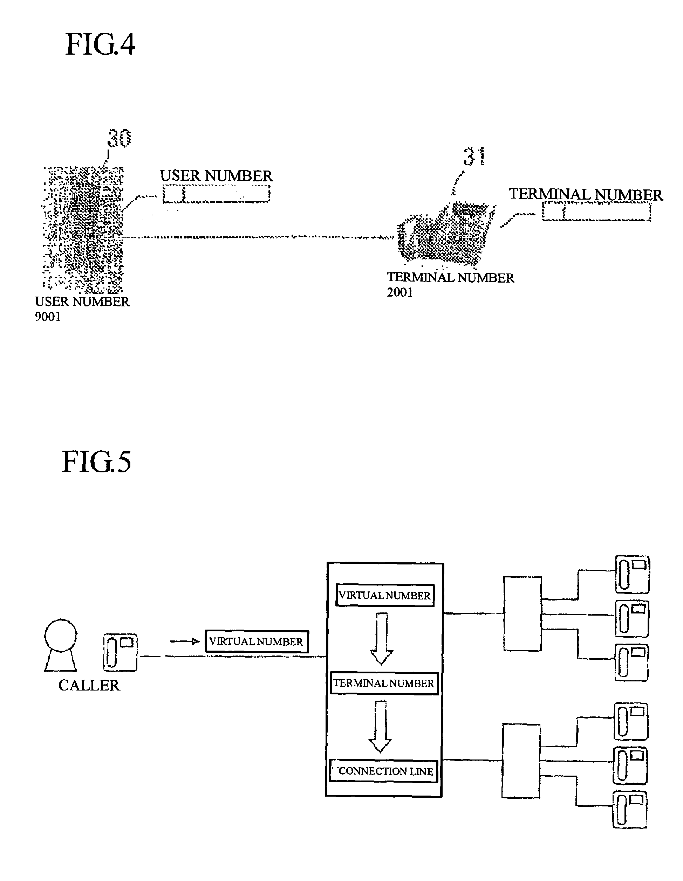

According to the invention, each telephone user (which will also be called user) of an organization is given a user number in advance, and a telephone terminal is given a telephone terminal number (where the telephone terminal number is a number given for identifying the corresponding telephone terminal and is different from the telephone line number (which is called real telephone number herein)). The telephone terminal number may be an extension number which has been already given or may be a newly given number. As the concept shown in Fig. 4, a user 30 is given a user number (which is "9001" in the example in Fig. 4), and a telephone terminal 31 is given a telephone terminal number (which is "2001" in the example in Fig. 4).

The telephone connection control unit 11 in the telephone connection control server 10 of the invention is, as described above, connected to the existing private branch exchange (PBX) 20 and the software PBX 12 and is connected to plural kinds of telephone networks and is being capable of switching plural kinds of telephone communication lines. Thus, according to the invention, as described above, the telephone user using the telephone connection control server 10 is given a user number, and the user number is handled as a virtual telephone number. The telephone terminal 22 connecting to the telephone connection control server 10 is given a telephone terminal number which is different from the real telephone number. The telephone connection control server 10 receives from the telephone user the registration of a current position number associating the telephone terminal number of the telephone terminal 22 that the user is going to use and the virtual telephone number corresponding to the user number. In response to the reception of the registration of the current position number by the telephone connection control server 10, the database 16 registers the registration data rewritably. Then, a user using the system 1 basically uses the user number being the virtual telephone number to receive and call by using the telephone terminal 22 for which the current position number has been registered. At that time, on the basis of the information registered in the database 16, call reception and calling are controlled. The conceptual diagram on calling by using the virtual telephone number is shown in Fig. 5. With reference to the data registered in the database 16, the software PBX control program 15 in the telephone connection control unit 11 determines to which telephone terminal number the received virtual telephone number is to be converted. The software PBX control program 15 converts the telephone terminal number to the real telephone number and allows calling to the telephone terminal with the designated real telephone number.

According to the invention, the virtual telephone numbers can be systemized independently of the types of the telephone terminals 20 connecting to the telephone connection control server 10 and the types of the lines connecting to the telephone terminals 22. In other words, in the system 1, the systemization may be implemented by a telephone manager, for example, and the systemization may be based on bases, departments, groups or the like.

The software PBX program 15 in the telephone connection control unit 11 further includes a function of determining the type of telephone network to be connected from the corresponding telephone number system for connection in order to allow the call reception and calling with the virtual telephone numbers. In other words, the telephone number to be transmitted or called includes the data describing the type of the telephone network. On the basis of it, the type of the telephone network is determined, and the software PBX is caused to perform the telephone connection switching.

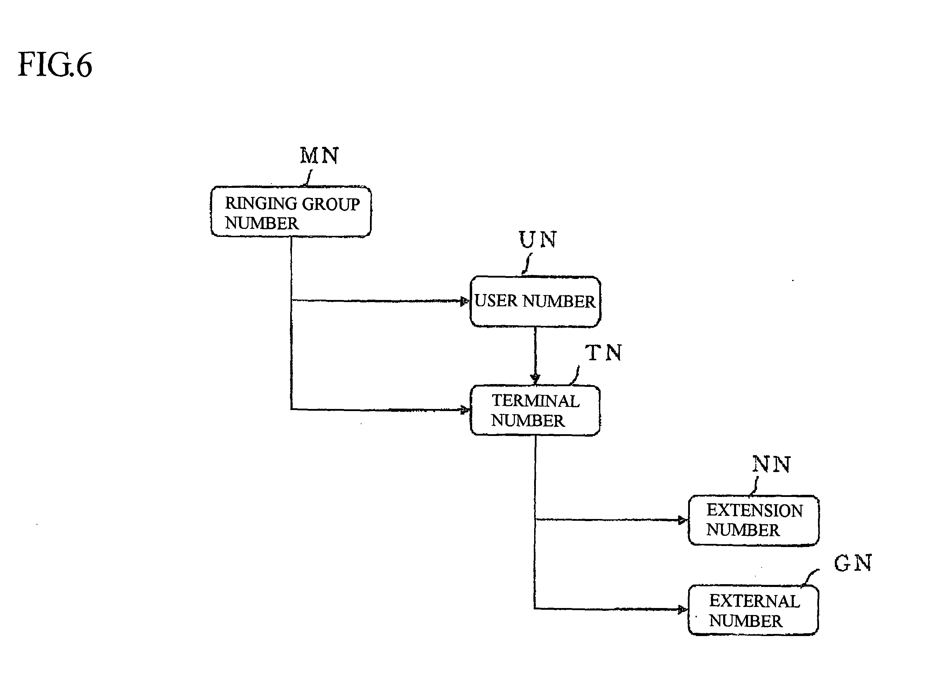

In the system 1, user numbers, terminal telephone numbers or an arbitrary combination thereof may be grouped to a ringing group, and the number of the ringing group may be used as the virtual telephone number to simultaneously make call to the plural telephone terminals corresponding to the virtual telephone number. The relationship among numbers when the ringing group number is the virtual telephone number is shown in Fig. 6. In this example, the ringing group number MG is associated with plural user numbers UN and terminal telephone numbers TN, and the terminal telephone numbers TN are associated with extension telephone numbers NN and external line telephone numbers GN. In other words, if the current position number is registered in advance, calls by the ringing group number MG can be received even in a different base.

Furthermore, in the system 1, the telephone terminal number of the telephone terminal at the position where a telephone user using the telephone connection control server 10 normally attends can be registered as the original position number with the database 16.

Now, the current position number registration will be described. In the current position number registration according to the invention, the current position number registration is allowed through a Web UI (which is a web user interface) (in the PC 23 in Fig. 1), in addition to the current position number registration by a login operation from a telephone terminal. Furthermore, the automatic current position number registration is also allowed with an IC tag (RFID) for identifying the corresponding user number. Furthermore, the current position number registration through a cellular phone is also allowed. In this way, the users of the system can perform the current position registration by a direct and simple method as much as possible. Furthermore, an indirect current position registration method by using a PC, for example, is also available independently of the types of the telephone terminal and line.

First of all, a method will be described in which a user 30 uses the telephone set of the telephone terminal that the user prefers to use to log in. Here, for easy registration, the telephone connection control server 10 side may be capable of providing a voice guidance. If the user 30 moves to the current position, the user 30 connects through the telephone set of the telephone terminal in the outside location to the software PBX control program 15 in the telephone connection control unit 11 in the telephone connection control server 10 and inputs the user number and personal identification number to the current position number registration function of the software PBX control program 15. Then, the software PBX control program 15 associates the telephone terminal number of the calling telephone terminal and the user number and performs the current position number registration on the database 16. Thus, the user 30 is only required to know the user number and personal identification number to perform the login operation easily through the telephone terminal.

After the current position registration, if the user 30 is called, the software PBX control program 15 consults the database 16 for the user number-current position telephone through its own current position switching mechanism. In response to the receipt of the information on the current position telephone, the software PBX control program 15 causes the call to arrive at the telephone terminal at the current position. Thus, the user 30 is allowed to start the call at the desirable position. Because a conventional telephone transfer setting adopts a method for registering the settings through a telephone terminal, the setting can be performed only when the destination terminal is at hand, resulting in the lack of flexibility. Furthermore, because the communication is diverted around the source telephone terminal, it is poor economy. However, in the case of the log-in through a telephone set of the invention, the user 30 registers the current position telephone through a telephone terminal or through a different telephone set in an outside location. Therefore, it is easy to use, rich in flexibility and economical.

The current position number of a telephone terminal in a planned destination may be registered in advance by logging in through a different telephone set. In this case, a user may log in the software PBX control program 15 in the telephone connection control unit 11 in the telephone connection control server 10 through the telephone set and input the registered telephone terminal number and the user number and personal identification number to the current position number registration function of the software PBX control program 15.

The log-in may be performed through a Web UI of a PC. In this case, a user 30 may log in the Web server 14 of the telephone connection control server 10, opens a user's personal telephone setting screen and inputs the telephone terminal number of the current position with reference to the screen of the Web UI of the PC 23. Thus, in the same manner as described above, the current position can be registered. In this case, a desirable telephone terminal may be selected from a list of telephone terminal numbers.

An IC tag (RFID) for identifying the user number may be used to perform automatic current position number registration. In this case, for example, an IC tag reader may be disposed at a specific place near a telephone terminal, and the IC tag reader and the telephone connection control server 10 are connected in advance. Then, if the IC tag is detected within a valid range, the telephone terminal number of the telephone terminal and the corresponding user number are transmitted to the telephone connection control server 10. In this case, for example, in cooperation with an access control system with the IC tag reader, they may be associated with the telephone terminal number in a room where the user 30 stays. Alternatively, a telephone terminal with the IC tag reader may be used. Therefore, the user 30 carries the IC tag recording the user number. If the software PBX control program 15 in the telephone connection control unit 11 in the telephone connection control server 10 receives the telephone terminal number and user number from the IC tag reader, the software PBX control program 15 automatically updates the registration. Thus, the user 30, without performing any operations, can use a telephone terminal around him or her as the current position telephone.

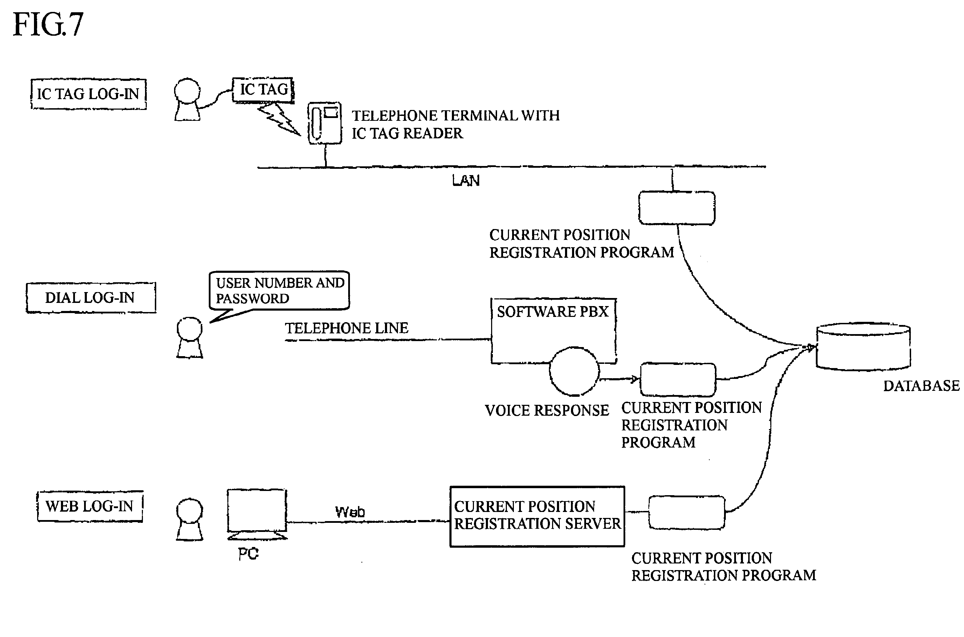

The conceptual diagram of the log-in is shown in Fig. 7.

According to the invention, the log-in may be performed by a function of a cellular phone. In this case, a downloadable program for the current position number registration may be pre-installed to a cellular phone, and the user number may be input through the program to perform an operation for the current position number registration. Thus, the program accesses the current position number registration function of the software PBX control program 15, transmits the user number and the number of the cellular phone. The current position number registration function of the software PBX control program 15 associates the user number with the number of the cellular phone. Thus, the current position number registration can be performed. In this case, the number of the cellular phone is automatically obtained and is therefore not required to input. Because the user number is saved in a cellular phone program, the transmission operation is only required from the next time to perform the current position number registration, without the input of the user number.

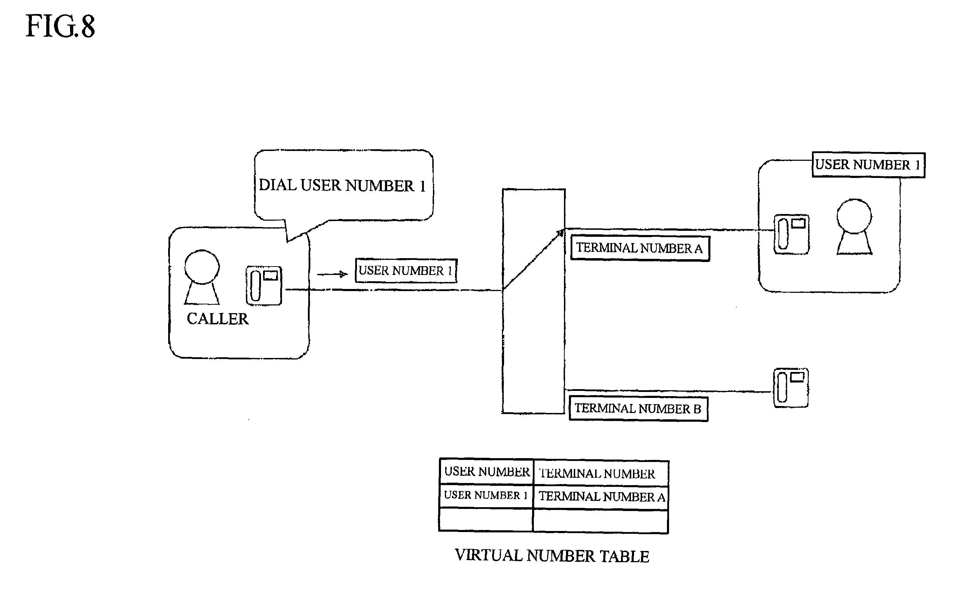

Next, an example of the telephone connection control according to the invention will be described with reference to Fig. 8 to Fig. 10. Fig. 8 shows a condition where a user with a user number 1 is performing the current position number registration on the telephone terminal with a telephone terminal number A. The virtual telephone number table in the database 16 registers the information as shown in the bottom part of Fig. 8. Under this condition, when a caller dials the user number 1, the telephone connection control server 10 refers to the virtual telephone number table in the database 16 and calls up to the telephone terminal with the terminal telephone number A and make call to the user with the user number 1.

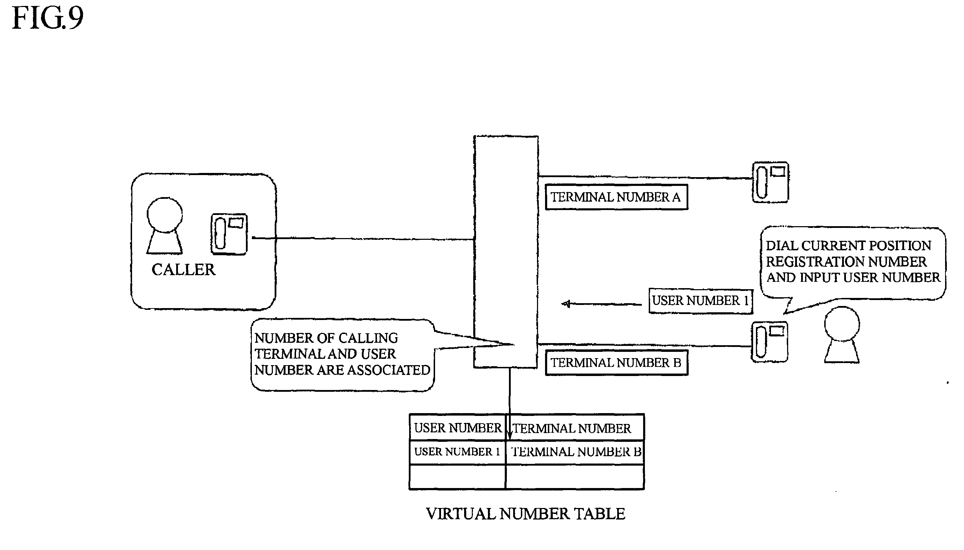

Then, when the user with the user number 1 changes the location and uses the telephone terminal with a terminal number B, the user may dial through the telephone terminal to the telephone connection control server 10 and dials the user number and the personal identification number to the telephone connection control server 10, as shown in Fig. 9. Then, the software PBX control program 15 rewrites and registers the current position number of the user number 1 on the virtual telephone number table in the database 16 to the terminal telephone number B.

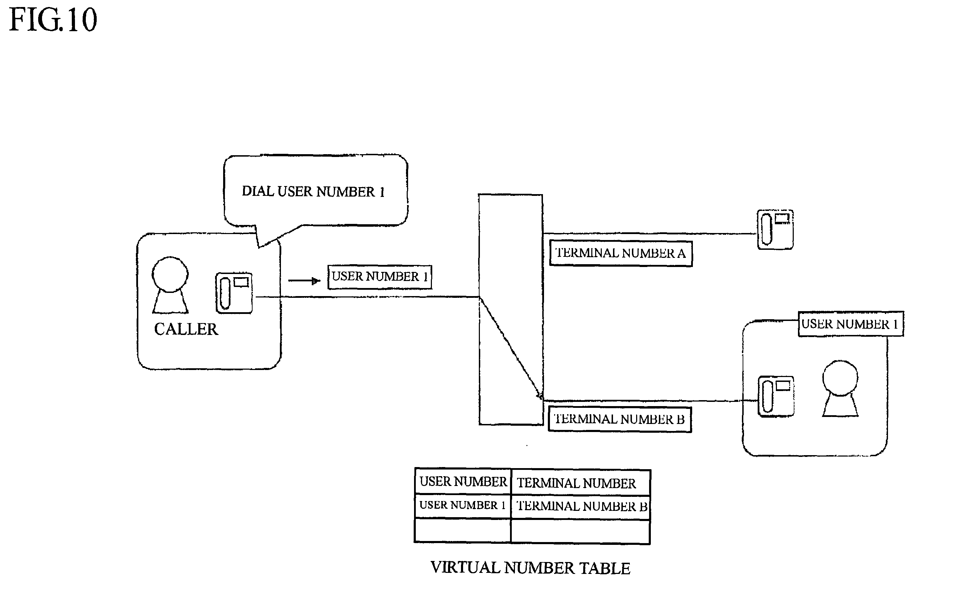

Under this condition, when the caller dials the user number 1, as shown in Fig. 10, the software PBX control program 15 in the telephone connection control server 10 refers to the database 16, calls up to the telephone terminal with the telephone terminal number B, and makes call to the user number 1.

The calling from the user with the user number 1 is performed similarly.

Also in response to calling by direct dialing, the telephone connection control applying the virtual telephone number is performed. In other words, the database 16 may prestore the correspondence table between contract numbers (which are real telephone numbers) and the virtual telephone numbers, and, with reference thereto, the connection control is performed in the same manner as that for the calling with the virtual telephone number such as a user number.

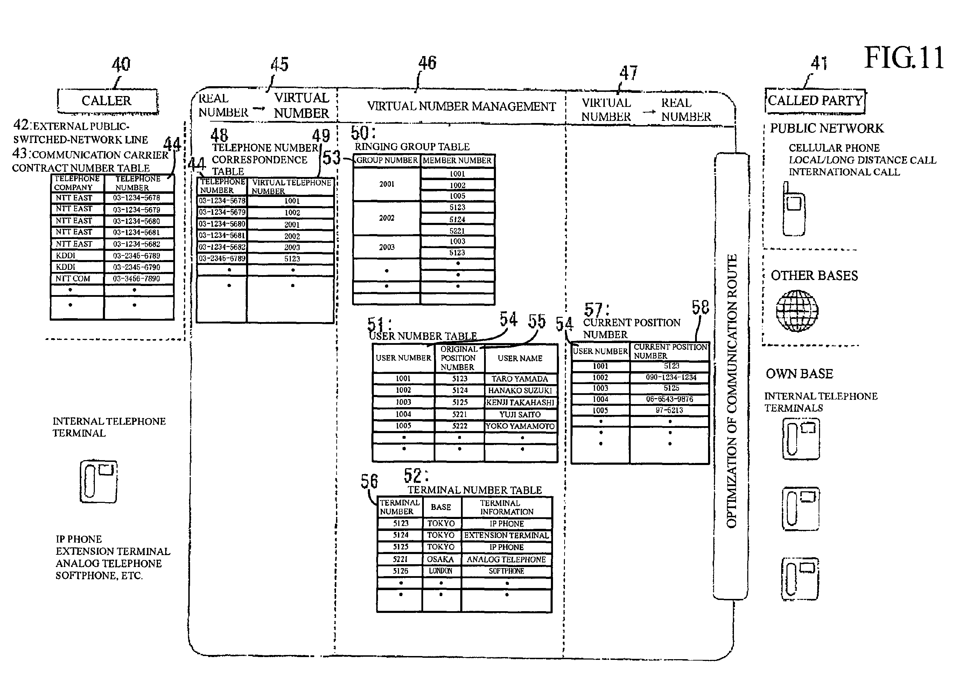

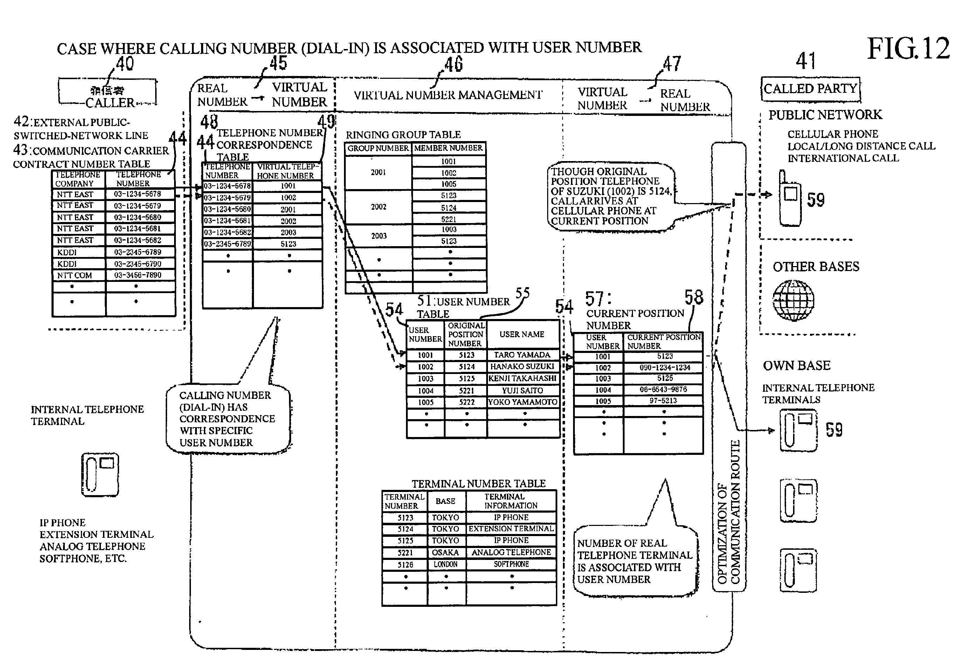

More specifically, it will be described with reference to Fig. 11 and Fig. 12. Fig. 11 is a conceptual diagram of the telephone connection control using a virtual telephone number. Fig. 12 is an operation explanatory diagram of the system when calling by direct dialing occurs. Fig. 11 includes a caller 40 and a called party 41. An example will be described in which the caller 40 makes a call to the called party 41 through an external public-switched-network line 42. The illustrated organization has signed contracts with several communication carriers and has telephone numbers under the contracts with the communication carriers. The relationship between the communication carriers and telephone numbers is schematically shown on a communication carrier contract number table 43. Fig. 11 includes contract real telephone numbers 44. On the other hand, the called party 41 may attend at the original position (which is a position where the telephone terminal is normally often used), in a place where a cellular phone is used, at a different position (current position) in the base, or in a different domestic or foreign base due to a business trip, for example.

In the telephone connection control server 10, in order to allow call from the caller 40 to the called party 41, the database 16 includes a real telephone number-virtual telephone number converting section 45, a virtual telephone number managing section 46, and a virtual telephone number-real terminal number managing section 47.

The real telephone number-virtual telephone number converting section 45 has a telephone number correspondence table 48, and the telephone number correspondence table 48 has the correspondence between a real telephone number 44 and a virtual telephone number 49 so that the real telephone number 44 which is calling can be converted to the corresponding virtual telephone number 49.

The virtual telephone number managing section 46 has a ringing group table 50, a user number table 51 and a terminal number table 52. The ringing group table 50 has the correspondence among the virtual telephone number 49, the group number 53 of a ringing group and the user numbers or telephone terminal numbers of the members belonging to the ringing group. The user number table 51 has the correspondence between telephone users and the user numbers 54. It can be said that the user number table 51 defines the user number 54 of a telephone user. It may also be said that the telephone terminal number table 52 defines the telephone terminal number 56 of a telephone terminal in the same manner.

The virtual telephone number-real terminal number managing section 47 includes a current position number table 57. The current position number table 57 has the correspondence between a user number 54 and a current position number 58.

The called party 41 may receive call through the telephone terminal with the original position number when the user attends at the original position, for example. When the user moves and leaves the real position, the user receives call through the telephone terminal with the current position number.
Therefore, by receiving the input of the telephone number of the telephone terminal that the called party 41(or user 30) uses in an outside location, the real position number can be rewritten to the current position number, which is then registered. In the software PBX control program 15 in the telephone connection control unit 11, routing is performed such that the communication path to the called party 41 can be optimized (which can optimize the communication cost).

Here, if call is made to the external line number (such as "03-1234-5678"), the real telephone number-virtual telephone number converting section 45 in the database 16 refers to the telephone number correspondence table 48 and converts the real telephone number to a virtual telephone number ("1001"). Because the dialed number (direct dialing) is associated with the specific user number, the user number table 51 in the virtual telephone number managing unit 46 is referred, and the current position number table 57 in the virtual telephone number-real terminal number managing section 47 is then referred. Because "5123" which is the real terminal number 58 corresponding to the user number "1001" on the current position number table 57 is registered thereon, the software PBX control program 15 attempts the optimization of the communication path to cause the call to arrive at the internal telephone terminal 59 of the user.

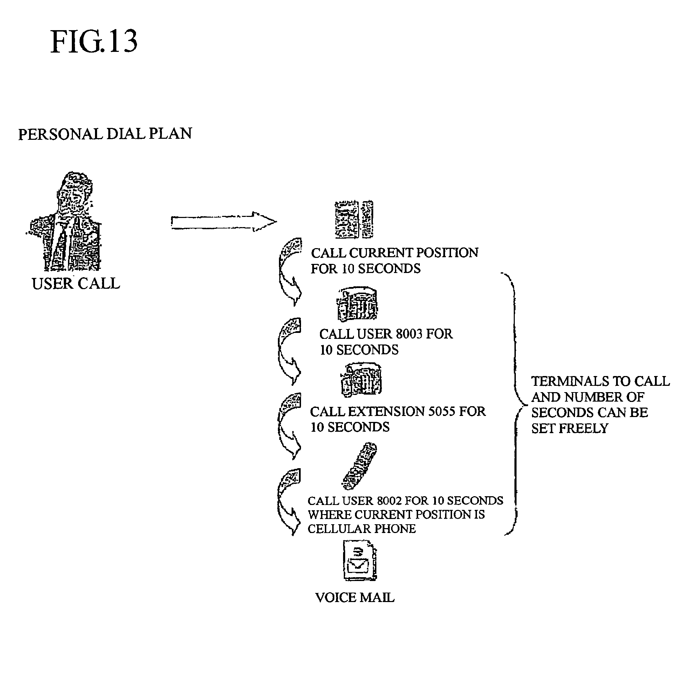

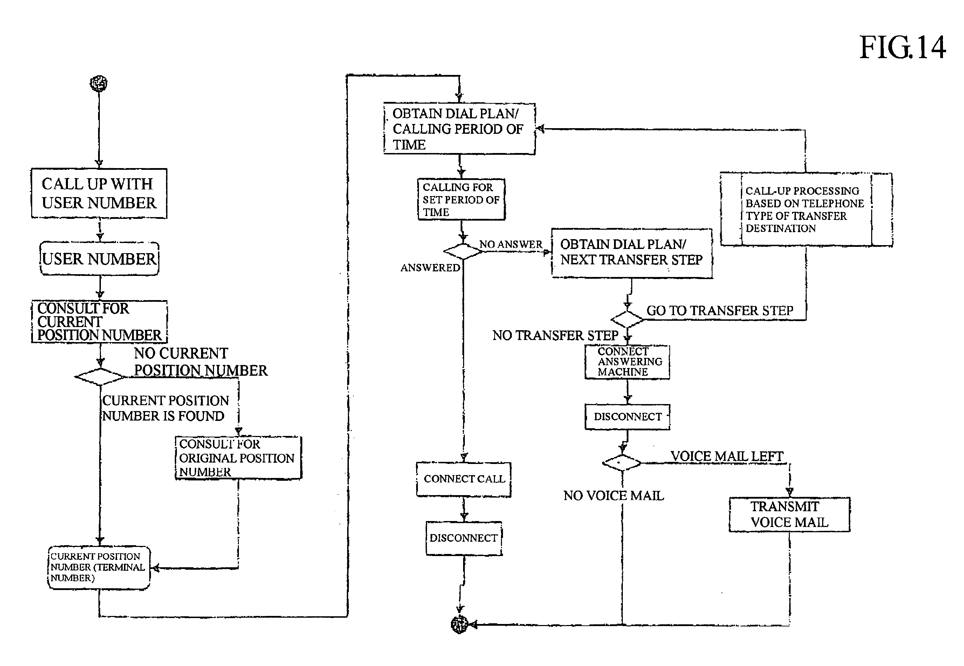

Next, a case for setting a personal preference will be described. The software PBX control program 15 in the telephone connection control unit 11 in the telephone connection control server 10 of the invention has a personal preference setting table for defining, as a personal preference, a dial plan for incoming calls for a user. The term personal preference refers to a dial plan to be set for the time when a user 30 may not answer phones or for designating a transfer sequence. The personal preference may also define the transfer to an answering machine, an alternate recipient, the corresponding department, a cellular phone or a voice mail. The concept of a dial plan defined as the personal preference is shown in Fig. 13. The flow of the call processing including the dial plan is shown in Fig. 14.

In this case, for example, transfer may be performed to a different telephone terminal after a preset ringing period of time. The software PBX control program 15 in the telephone connection control unit 11 may allow the personal preference defined on a personal preference setting table to be incorporated as a conditional flow. By calling up plural different kinds of numbers such as the types of telephone terminals and group numbers or by merging telephone terminal numbers, group numbers, user numbers and so on into a reasonable number system, they can be incorporated to a dial plan independently of the number types. Furthermore, a message left in a so-called answering machine may be listened through any telephone terminal. In this case, if a call is not answered within a preset ringing time, for example, the call may be transferred to a different telephone. It may be allowed by incorporating the transfer control according to the conditional flow (or dial plan) of the telephone transfer stored on the personal preference setting table by the software PBX control program 15 in the telephone connection control unit 11. A user number, a terminal telephone number, and a ringing group number, for example, may be combined, and the transfer sequence may be determined in a desirable manner. Furthermore, the transfer to an answering machine may be implemented.

The invention may be expected for various application scenes in addition to those described above. For example, it may be applicable to a case where a salesperson before calling around performs the current position number registration with a cellular phone in advance, a case where the current position number registration is performed on the telephone in a conference room because a user is out for a long time meeting, a case where a call from a client is to be received at the current position by mapping the direct dialing number on a business card to the user number, a case where a user makes call to the company by using a softphone of a laptop PC through an Internet connection service in a hotel the user stays on business, a case where the current position number registration is performed on the rented cellular phone under the contract in a foreign place a user visits on business and so on.

## Claims

1. A telephone connection control method for performing connection control by using a telephone connection control server having a telephone connection control function having a software telephone exchange function, connecting to plural kinds of telephone networks and being capable of switching plural kinds of telephone communication lines, said method comprising steps of:
assigning a user number a telephone user using the telephone connection control server and handling the user number as a virtual telephone number;
assigning a telephone terminal number different from a real telephone number to a telephone terminal connecting to the telephone connection control server;
receiving from the telephone user the registration of a current position number associating the telephone terminal number of the telephone terminal that the user is going to use and a virtual telephone number corresponding to the user number and registering it with a database rewritably by the telephone connection control server; and
using, on the basis of the information registered with the database, the virtual telephone number to perform transmission and reception by a caller using the telephone connection control server and a recipient.

2. The telephone connection control method according to Claim 1, wherein as the telephone connection control server, one is used which has a function of determining the type of the telephone network to be connected from a telephone number system and connects to it.

3. The telephone connection control method according to Claim 1 or 2, wherein the plural user numbers or the plural user numbers and terminal telephone numbers are grouped into a virtual telephone number corresponding to a ringing group number, and the plural telephone terminals corresponding to the virtual telephone number can be simultaneously called up.

4. The telephone connection control method according to any one of Claims 1 to 3, wherein the telephone terminal number of the telephone terminal at an original position where the user utilizing the telephone connection control server usually attends can be registered in the database as an original position number.

5. The telephone connection control method according to any one of Claims 1 to 4, wherein a dial plan for incoming calls to a user number can be defined for a telephone user.

6. The telephone connection control method according to any one of Claims 1 to 5, wherein the telephone connection control server can receive the registration of the current position number by using a telephone terminal.

7. The telephone connection control method according to any one of Claims 1 to 5, wherein the telephone connection control server can receive the registration of a current position number by an access through a personal computer.

8. The telephone connection control method according to any one of Claims 1 to 5, wherein the telephone connection control server receives the information read by an IC tag reader provided at a specific location from an IC tag held by a telephone user and storing information for identifying the user and can receive the registration of the current position number.

9. The telephone connection control method according to any one of Claims 1 to 5, wherein the registration of the current position number by using a cellular phone having a program for the current position number registration can be received.

10. The telephone connection control method according to any one of Claims 1 to 9, wherein the telephone connection control server is provided in each of plural bases, and the telephone connection control servers cooperate with each other among the bases to perform intra-base telephone connection control and inter-base telephone connection control.

11. A telephone connection control system for performing the telephone connection control method according to any one of Claims 1 to 10, wherein:
the telephone connection control server has a telephone connection control unit having a software telephone exchange function, connecting to plural kinds of telephone networks, and being capable of switching plural kinds of telephone communication lines;
the telephone connection control unit has a software telephone exchange control unit controlling an operation of a software telephone exchange and a database storing the telephone terminal number of the telephone terminal used by a telephone user and a virtual telephone number corresponding to a user number of a telephone user in association rewritably as a current position number; and
a caller using the telephone connection control server and a recipient uses the virtual telephone number to perform transmission and reception, on the basis of the information stored in the database.
